(19) Europäisches Patentamt / European Patent Office / Office européen des brevets

(11) **EP 4 733 658 A1**

(12) **EUROPÄISCHE PATENTANMELDUNG**

(43) Veröffentlichungstag:
**29.04.2026   Patentblatt 2026/18**

(21) Anmeldenummer: 25201618.3

(22) Anmeldetag: **11.09.2025**

(51) Internationale Patentklassifikation (IPC):
**F17D 1/04** (2006.01)   **F17D 3/00** (2006.01)

(52) Gemeinsame Patentklassifikation (CPC):
**F17D 1/04; F17D 3/00; G05B 23/0283;**
G06F 2113/14

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität:  **24.10.2024   DE 102024131017**

(71) Anmelder: **Bayernwerk Netz GmbH**
**93049 Regensburg (DE)**

(72) Erfinder:
• **Simon, Michael**
  **92723 Tännesberg (DE)**

• **Ellert, Florian**
  **92670 Windischeschenbach (DE)**
• **Götzendörfer, Jürgen**
  **97453 Schonungen (DE)**
• **Hengstl, Stefan**
  **92648 Vohenstrauß (DE)**
• **Zwicknagel, Marco**
  **93491 Stamsried (DE)**

(74) Vertreter: **Gunzelmann, Rainer**
**Wuesthoff & Wuesthoff**
**Patentanwälte und Rechtsanwalt PartG mbB**
**Schweigerstraße 2**
**81541 München (DE)**

(54) **VERFAHREN UND VORRICHTUNG FÜR GASNETZE**

(57)    Es werden ein Verfahren (100) und eine Vorrichtung für Gasnetze beschrieben. Das Verfahren (100) umfasst die Verfahrensschritte Aufnehmen (110) von Daten betreffend die Gasnetze, Berechnen (120), basierend auf den Daten betreffend die Gasnetze, von technischen Verbrauchsfaktoren für jedes Gasnetz (40), Vergleichen (130) der technischen Verbrauchsfaktoren und Ausgeben (140) eines Vergleichergebnisses der technischen Verbrauchsfaktoren.

Fig. 1

EP 4 733 658 A1

**Beschreibung**

TECHNISCHES GEBIET

Die vorliegende Offenbarung betrifft ein Verfahren und eine Vorrichtung für Gasnetze.

HINTERGRUND

Gasnetze sind komplexe Infrastruktursysteme, die verschiedenen Risiken und Gefahren ausgesetzt sind, die sowohl die Betriebssicherheit als auch die Umwelt und die öffentliche Sicherheit betreffen. Ein zentrales Problem ist das Risiko von Leckagen, die durch verschieden Faktoren wie Materialermüdung, Korrosion, mechanische Beschädigungen oder fehlerhafte Verbindungen verursacht werden.

Korrosion und Materialermüdung, insbesondere bei älteren Gasleitungen aus Stahl, können ebenfalls Probleme bereiten. Diese Faktoren können die Struktur der Leitungen schwächen und letztlich zu Gasaustritten führen. Gasaustritte können zu Explosionen oder Bränden führen, was erhebliche Gefahren für Menschen, Gebäude und die Umwelt darstellt. Zudem trägt Methan, der Hauptbestandteil von Erdgas, als Treibhausgas erheblich zum Klimawandel bei, wenn es unkontrolliert in die Atmosphäre entweicht.

Witterungseinflüsse und Naturkatastrophen wie Erdbeben, Überschwemmungen oder extreme Temperaturen stellen zusätzliche Gefahren dar, da sie die physische Integrität der Gasleitungen beeinträchtigen und zu schweren Schäden oder Gasaustritten führen können.

Ferner bringt die zurzeit angedachte Umstellung von Erdgas auf Wasserstoff technische Herausforderungen mit sich, da Wasserstoff ein kleineres Molekül als Methan ist und schneller durch Materialien diffundieren kann. Ohne geeignete Anpassungen kann dies zu erhöhten Leckagen und Materialversprödung führen, was neue sicherheitskritische Probleme aufwirft.

Die DE 1 244 330 betrifft Verfahren und eine Vorrichtung zur Umstellung eines Rohrleitungsnetzes von Stadtgas auf Erdgas. Insbesondere geht es um ein Verfahren, bei dem während der Umstellung ein Hilfsgasgemisch verwendet wird, das in seinen Eigenschaften dem Erdgas entspricht. Die Druckschrift zielt darauf ab, die Notwendigkeit von temporären Hilfsleitungen und damit verbundene Kosten und Schwierigkeiten zu vermeiden, indem eine ortsungebundene Mischanlage verwendet wird, die direkt vor Ort das Hilfsgas herstellt und in das umgestellte Netz einspeist. Dies ermöglicht eine schrittweise Umstellung des Gasnetzes, ohne den Betrieb der Gasversorgung erheblich zu unterbrechen.

Die DE 10 2010 020 280 A1 betrifft ein Verfahren zum Transportieren und Verteilen von gasförmigem Wasserstoff. Insbesondere wird ein Verfahren beschrieben, bei dem Wasserstoff durch ein Rohrleitungsnetz transportiert wird, das in ein bestehendes Rohrleitungsnetz integriert ist, beispielsweise in ein Erdgas-Rohrleitungsnetz.

ABRISS DER OFFENBARUNG

Der vorliegenden Offenbarung liegt die Aufgabe zugrunde, ein Verfahren und eine Vorrichtung für Gasnetze bereitzustellen, mit deren Hilfe Risiken in Gasnetzen verringert werden können.

Zur Lösung dieser Aufgabe wird ein Verfahren für Gasnetze vorgeschlagen, das die folgenden Schritte umfasst: Aufnehmen von Daten betreffend die Gasnetze, Berechnen, basierend auf den Daten betreffend die Gasnetze, von technischen Verbrauchsfaktoren für jedes Gasnetz, Vergleichen der technischen Verbrauchsfaktoren und Ausgeben eines Vergleichsergebnisses der technischen Verbrauchsfaktoren.

Bei den Gasnetzen handelt es sich um Infrastruktur, die zur Verteilung von Gas von Hauptleitungen zu Endverbrauchern dient. Diese Netze umfassen eine Vielzahl von unterirdischen und manchmal auch oberirdischen Leitungen, die das Gas durch verschiedene Druckstufen und geografische Bereiche transportieren. Das Kernstück eines Gasnetzes ist das Leitungsnetz, das aus verschiedenen Rohren und Leitungen besteht, die aus Materialien wie Stahl, Kunststoff oder in älteren Systemen auch aus Gusseisen gefertigt sind. Diese Leitungen variieren in ihrer Dimension und ihrem Material, je nach den spezifischen Anforderungen und den örtlichen Gegebenheiten. Wenn nachfolgend von Gasnetzen gesprochen wird, sind immer auch Teile von Gasnetzen gemeint. Ein wesentlicher Bestandteil von Gasnetzen sind Druckregelanlagen, die den Druck des Gases auf ein für die Verteilung geeignetes Niveau reduzieren, da das Gas häufig mit hohem Druck durch die Transportnetze geleitet wird. Netzanschlüsse verbinden das Gasnetz mit den Gebäuden der Endverbraucher und beinhalten eine Hauptabsperreinrichtung, ein Gasruckregelgerät (ab erhöhtem Niederdruck) und ein Messeinrichtung, zur Messung des Gasverbrauchs. Zusätzlich gibt es Mess- und Regeltechnik, die den Druck, die Menge und die Qualität des verteilten Gases überwacht. Ferner können Korrosionsschutzsysteme vorgesehen sein, um die unterirdischen Leitungen vor Korrosion zu schützen und somit die Lebensdauer der Leitungen zu verlängern und Leckagen zu verhindern. Notfall- und Sicherheitsvorrichtungen wie Sicherheitsventile und Druckentlastungsventile sind ferner in dem Netz integriert, um im Falle von Überdruck oder anderen Notfällen automatisch aktiviert zu werden und die Sicherheit des Netzes zu gewährleisten.

Das Verfahren kann beispielsweise von einer Computervorrichtung mit einem Prozessor und einem Speicher, oder einem Cloud-Server ausgeführt werden.

Die aufgenommenen Daten betreffend die Gasnetze können die folgenden Daten umfassen: Baujahr eines Gasnetzes oder eines Teils eines Gasnetzes, Material von Komponenten, Rohrleitungen und/oder Anlagentechnik eines Gasnetzes oder eines Teils eines Gasnetzes, Dimension eines Gasnetzes oder eines Teils eines Gasnetzes, technischer Zustand eines Gasnetzes oder eines Teils eines Gasnetzes, maximale Lebensdauer eines Gasnetzes oder eines Teils eines Gasnetzes, Druckstufe eines Gasnetzes oder eines Teils eines Gasnetzes, Wasserstoffeignung eines Gasnetzes oder eines Teils eines Gasnetzes und/oder Entfernung eines Gasnetzes oder eines Teils eines Gasnetzes zu einem Wasserstoffbezugspunkt. Die Entfernung eines Gasnetzes zu einem Wasserstoffbezugspunkt kann Information bereitstellen, wie sinnvoll eine Umstellung eines Gasnetzes auf Wasserstoff ist. Das Verfahren kann ferner Prüfen, ob Biomethan im Gasnetz vorhanden ist, umfassen. Das Verfahren kann Folgendes prüfen: die Daten des Gasnetzes (Material, Baujahr, Dimension, ...) und Entfernung Wasserstoffbezugspunkt und Vorhandensein von Biomethan. Bei den Daten kann es sich um normierte Werte, beispielsweise von 0 bis 1, handeln, wobei 0 einen niedrigsten Wert und 1 einen höchsten Wert angibt. Die Daten betreffend die Gasnetze können als Eingangswerte für das Verfahren aufgenommen werden. Beispielsweise können Sie zur Aufnahme von einer Datenbank gelesen werden oder ein Server sendet die Daten zur Datenaufnahme.

Die technischen Verbrauchsfaktoren für jedes Gasnetz sind Kennzahlen, die den Verschleißgrad oder Verschleiß von technischen Komponenten, Anlagen oder Systemen des Gasnetzes in Relation zu ihrer geplanten oder maximalen Lebensdauer ausdrücken. Sie dienen dazu, den aktuellen Zustand einer Komponente zu bewerten und Entscheidungen darüber treffen zu können, wann Reparatur- oder Erneuerungsmaßnahmen notwendig sind. Diese Faktoren berücksichtigen verschiedene Aspekte, wie etwa die Nutzungsdauer im Vergleich zur erwarteten Lebensdauer, was bedeutet, dass der Verbrauchsfaktor das Verhältnis zwischen der bereits abgelaufenen Nutzungszeit und der insgesamt erwarteten Lebensdauer einer Komponente darstellen kann. Ein Verbrauchsfaktor, der nahe bei Null liegt, deutet darauf hin, dass die Komponente das Ende ihrer Lebensdauer erreicht hat und bald ersetzt oder umfassend gewartet werden muss. Ein weiterer Aspekt, den technische Verbrauchsfaktoren berücksichtigen können, ist die Materialermüdung und Korrosion. Diese Phänomene können durch die Betriebsumgebung und die Materialien der Komponenten des Gasnetzes verursacht werden, und sie führen zu einem erhöhten Verschleiß, der sich in einem höheren Verbrauchsfaktor niederschlägt. Auch die Betriebsbedingungen können berücksichtigt werden, da Faktoren wie Temperatur, Druck, mechanische Belastung und Umwelteinflüsse den Verschleiß beschleunigen können, was den Verbrauchsfaktor entsprechend erhöht. Wartung und Instandhaltung können ebenfalls einen Einfluss auf den Verbrauchsfaktor haben. Regelmäßige und gut durchgeführte Wartungsarbeiten können den Verbrauchsfaktor positiv beeinflussen, indem sie die Lebensdauer der Komponenten verlängern. Im Gegensatz dazu kann ein Mangel an Wartung dazu führen, dass der Verbrauchsfaktor schneller ansteigt, da die Komponenten stärker verschleißen. Darüber hinaus beeinflusst auch die Nutzungsintensität einer Komponente oder eines Systems des Gasnetzes den technischen Verbrauchsfaktor.

Das Berechnen von technischen Verbrauchsfaktoren für jedes Gasnetz kann durch ein Verfahren erfolgen, das auf den Daten betreffend die Gasnetze basiert. Zunächst können dazu die Daten gesammelt und strukturiert werden. Nachdem die Daten erfasst wurden, können sie in ein Modell eingespeist werden, das die Lebensdauer der verschiedenen Komponenten des Gasnetzes berechnet. Das Modell berücksichtigt dabei die spezifischen Eigenschaften jeder Komponente, wie etwa die Materialbeständigkeit, die Korrosionsanfälligkeit und die mechanischen Belastungen, denen die Komponenten ausgesetzt sind. Basierend auf diesen Faktoren wird dann der technische Verbrauchsfaktor für jede Komponente des Gasnetzes ermittelt. Der technische Verbrauchsfaktor wird als Verhältnis zwischen der bereits abgelaufenen Nutzungszeit und der maximalen oder erwarteten Lebensdauer der jeweiligen Komponente berechnet. Zum Beispiel kann dies durch eine Formel erfolgen, bei der das Alter der Komponente durch ihre erwartete Lebensdauer dividiert wird. Ein niedrigerer Verbrauchsfaktor deutet darauf hin, dass die Komponente näher an ihrem Lebensende ist und möglicherweise bald ersetzt werden muss. Zusätzlich können Berechnungen spezifische Betriebsbedingungen und Ergebnisse bisheriger Wartungsmaßnahmen einbeziehen. Diese zusätzlichen Daten ermöglichen eine genauere Bewertung des aktuellen Zustands der Netzkomponenten und eine präzisere Vorhersage ihrer verbleibenden Lebensdauer. Die Ergebnisse dieser Berechnungen können dann für jedes Gasnetz konsolidiert werden, um einen umfassenden Überblick über den Zustand des gesamten Netzes zu erhalten.

Für eine vereinfachte Weiterverarbeitung der Daten können die technischen Verbrauchsfaktoren jeweils als eine Zahl zwischen 0 und 1 berechnet werden.

Nach dem Berechnen der technischen Verbrauchsfaktoren werden diese verglichen und eine Vergleichsergebnis der technischen Verbrauchsfaktoren wird ausgegeben. Das Vergleichsergebnis kann eine Priorisierung der Gasnetze angeben. Beispielsweise werden als ein Vergleichsergebnis von zehn Gasnetzen die Gasnetze von eins bis zehn eingeordnet. Dadurch kann das Gasnetz der Vielzahl von Gasnetzen bestimmt werden, welches aus Sicherheitsgründen die höchste Notwendigkeit für Instandsetzungs- bzw. Modernisierungsmaßnahmen aufweist. Die Ausgabe des Vergleichsergebnisses kann beispielsweise als eine digitale Datei erfolgen. Das Vergleichsergebnis kann auch an eine weitere Vorrichtung ausgegebenen werden, wo es weiterverarbeitet und/oder für eine Steuerung verwendet wird.

Um die Lebensdauer bzw. Ausfallsicherheit eines Gasnetzes, das die höchste Notwendigkeit für Instandsetzungs- bzw. Modernisierungsmaßnahmen aufweist, zu erhöhen, kann das Verfahren ferner die folgenden Schritte aufweisen: Auswählen, basierend auf dem Vergleichsergebnis, eines der Gasnetze und Ausgeben eine das ausgewählte Gasnetz betreffenden Nachricht. Bei der Nachricht kann es sich beispielsweise um eine E-Mail an einen Netzbetreiber oder zuständiges Fachpersonal eines Netzbetreibers handeln, in der dieser über das Vergleichsergebnis informiert wird.

Bei der Auswahl kann das Gasnetz der Vielzahl von Gasnetzen ausgewählt werden, das die höchste Notwendigkeit, d.h. die höchste Priorität, für Instandsetzungs- und/oder Modernisierungsmaßnahmen aufweist.

Gemäß einer Weiterbildung kann das Verfahren den Schritt Filtern der Gasnetze nach Netzebenen und/oder Standorten umfassen, wobei sich die technischen Verbrauchsfaktoren in Abhängigkeit von der Filterung ändern. Dadurch können die Gasnetze nach bestimmten Kriterien, wie etwa der Netzebene (zum Beispiel Hochdruck-, Mitteldruck- oder Niederdrucknetze) oder nach geografischen Standorten (wie Städte, Regionen oder bestimmte Netzabschnitte), segmentiert oder gruppiert werden. Die Filterung ermöglicht es, die Netzkomponenten gezielt nach diesen Kriterien zu analysieren und nachfolgend zu steuern. Wenn die Gasnetze gefiltert werden, ändern sich die technischen Verbrauchsfaktoren entsprechend der spezifischen Bedingungen und Eigenschaften der gefilterten Gruppe. Durch das Filtern nach Netzebenen und/oder Standorten kann der Zustand des Netzes präziser bewertet werden, indem spezifische Faktoren wie Druck, Material, Alter oder Umgebungsbedingungen berücksichtigt werden, die je nach Netzebene oder Standort unterschiedlich sein können. Diese differenzierte Analyse ermöglicht es, Wartungs- oder Erneuerungsmaßnahmen gezielt für die gefilterten Netzsegmente zu planen, um die Effizienz und Lebensdauer des Netzes insgesamt zu optimieren. Die differenzierte Analyse ermöglicht auch eine zielgerichtete Steuerung von Gasnetzen zur Erhöhung der Lebenszeit.

Ferner können basierend auf dem Vergleichsergebnis Modernisierungsvorgaben für die Gasnetze bestimmt werden. Sobald das Vergleichsergebnis vorliegt, kann es genutzt werden, um konkrete Modernisierungsvorgaben zu entwickeln. Diese Vorgaben können Maßnahmen umfassen wie den Austausch oder die Erneuerung von Leitungen die Implementierung neuer Technologien oder die Verstärkung von Instandsetzungsmaßnahmen Ziel dieser Vorgaben ist es, die Sicherheit, Effizienz und Lebensdauer der Gasnetze zu verbessern, indem Schwachstellen beseitigt und das Netz auf den neuesten Stand der Technik gebracht wird.

Das Verfahren kann ferner den Schritt Bereinigen, vor dem Berechnen der Verbrauchsfaktoren, der aufgenommen Daten umfassen. Die gesammelten Daten können zunächst auf Fehler, Inkonsistenzen oder unvollständige Informationen geprüft und korrigiert werden, bevor sie für die Berechnung verwendet werden. Dieser Bereinigungsprozess kann sicherzustellen, dass die Daten korrekt und vollständig sind, damit die Verbrauchsfaktoren zuverlässig und präzise berechnet werden können. In der Praxis kann dies bedeuten, dass Ausreißer, also extrem abweichende Werte, identifiziert und entfernt oder korrigiert werden, da sie das Berechnungsergebnis verfälschen können. Ebenso können mögliche Fehler, wie Tippfehler oder ungenaue Messwerte, identifiziert und korrigiert werden. Falls in den Daten bestimmte Informationen fehlen, können diese, soweit möglich, ergänzt werden, um sicherzustellen, dass alle relevanten Datenfelder vollständig ausgefüllt sind. Darüber hinaus werden die Datenformate standardisiert, um eine einheitliche und konsistente Grundlage für die Berechnungen zu schaffen. Durch diesen Bereinigungsprozess wird gewährleistet, dass die Verbrauchsfaktoren auf validen und genauen Daten basieren, was die Zuverlässigkeit und Aussagekraft der Ergebnisse erheblich verbessert.

Die vorstehend beschriebenen Verfahren können durch eine Vorrichtung für Gasnetze ausgeführt werden, die einen Prozessor umfasst. Die Vorrichtung für Gasnetze kann durch eine Kombination von Hardware, Software und spezifischen Algorithmen realisiert werden. Die Datenaufnahme durch die Vorrichtung für Gasnetze kann durch Dateneingabe erfolgen. Weitere Daten, wie Betriebsalter-Daten oder Baujahr, können von einer Datenbank empfangen werden. Die Vorrichtung für Gasnetze kann ein Server oder ein spezialisiertes Embedded System sein, das über ausreichende Rechenkapazitäten und Speicher verfügt, um die Daten in Echtzeit oder in regelmäßigen Abständen zu verarbeiten. Auf der Software-Seite kann ein Datenmanagementsystem vorgesehen sein, um die eingehenden Daten zu speichern, zu organisieren und für die Verarbeitung zugänglich zu machen. Das System kann dazu eingerichtet sein, große Datenmengen effizient zu handhaben und bei Bedarf bereitzustellen. Um die technischen Verbrauchsfaktoren zu berechnen, können spezialisierte Algorithmen zum Einsatz kommen. Diese Algorithmen verarbeiten Daten wie z.B. Wartungsintervalle, Material, Dimension, Druckstufe und Baujahr der Leitungen sowie Baujahr, Druckstufe und Wartungsintervalle der Gasstationen Nachdem die Verbrauchsfaktoren berechnet wurden, können Vergleichsalgorithmen angewendet werden, um diese Faktoren zu analysieren und Unterschiede oder Trends zu identifizieren.

Zur Lösung des eingangs genannten Problems wird ferner eine Vorrichtung für Gasnetze vorgeschlagen, die einen Prozessor umfasst, der dazu eingerichtet ist, eines der vorstehend beschriebenen Verfahren auszuführen.

Die Vorrichtung kann eine Kommunikationsvorrichtung umfassen, die dazu eingerichtet ist, die Nachricht an einen Netzbetreiber zu senden. Bei der Nachricht kann es sich beispielsweise um eine E-Mail an zuständiges Fachpersonal oder eine Leitstelle des Netzbetreibers handeln.

In einer bevorzugten Ausführungsform der Erfindung sind in Gasstationen und/oder Netzkoppelpunkten des Gasnetzes eine Vielzahl von Sensoren installiert, die verschiedene betriebsrelevante Parameter kontinuierlich oder in festgelegten Intervallen messen. Zu den eingesetzten Sensoren können einer oder mehrere der folgenden Sensoren gehören:

- Drucksensoren, welche den Gasdruck an bestimmten Abschnitten des Netzes erfassen,
- Temperatursensoren, die die Temperatur des Gases oder der Anlagenumgebung messen,
- Mengensensoren, insbesondere Gaszähler, welche den Gasdurchsatz beziehungsweise den Gasabsatz in einem bestimmten Zeitraum messen.

Die Sensoren sind vorzugsweise an neuralgischen Punkten des Gasnetzes, wie beispielsweise an Übergabestationen, Netzkoppelpunkten oder in größeren Verbrauchereinheiten, angeordnet. Sie sind dabei technisch so ausgelegt, dass sie den jeweiligen Betriebsbedingungen (Druckbereich, Gastyp, Temperatur) dauerhaft standhalten und präzise Messwerte liefern.

Die von den genannten Sensoren erfassten Messwerte werden vorzugsweise automatisiert über geeignete Kommunikationsschnittstellen (z. B. kabelgebundene oder drahtlose Datenübertragung, z. B. über ein Supervisory Control and Data Acquisition, SCADA, -System, industrielle Bussysteme oder Internet of Things, IoT, -Funkstandards) an eine zentrale oder dezentrale Datenbank übertragen. In dieser Datenbank werden die Sensordaten zusammen mit Zeitstempeln und einer eindeutigen Zuordnung zum jeweiligen Netzabschnitt abgelegt.

Die Speicherung der Daten kann fortlaufend erfolgen, so dass ein historischer Verlauf der Messwerte (Zeitreihe) für jeden Sensor beziehungsweise jeden Netzabschnitt zur Verfügung steht. Dies ermöglicht nicht nur eine Momentaufnahme, sondern auch eine langfristige Analyse und Bewertung der Entwicklung der relevanten Betriebsparameter im Gasnetz.

Die in der Datenbank abgelegten Sensordaten können durch die erfindungsgemäße Vorrichtung, welche in Form eines Datenverarbeitungssystems (beispielsweise ein Server, ein Industrie-PC, eine Edge-Computing-Unit oder eine Cloud-basierte Plattform) realisiert sein kann, automatisiert ausgelesen und weiterverarbeitet.

Das Datenverarbeitungssystem ist dazu eingerichtet, die aktuellen sowie historischen Sensordaten regelmäßig zu analysieren und als zusätzliche Eingangsdaten für die Berechnung der technischen Verbrauchsfaktoren der jeweiligen Gasnetzkomponenten oder - abschnitte zu verwenden. Dies geschieht vorzugsweise vollautomatisch durch geeignete Softwaremodule, die einen oder mehrere der folgenden Schritte umfassen können:

- automatisiertes periodisches Auslesen der neuen Sensordaten aus der Datenbank,
- Plausibilitätsprüfung und Datenbereinigung der Messwerte (z. B. Erkennung und Filterung von Ausreißern, fehlerhaften oder unplausiblen Messwerten),
- Zuordnung der Sensordaten zu den jeweiligen Netzabschnitten, Komponenten oder Betriebszuständen,
- Integration der Sensordaten in die Berechnungsmodelle für technische Verbrauchsfaktoren (z. B. Berücksichtigung von real gemessenem Gasdurchsatz)

Erfindungsgemäß können somit in zumindest einem Abschnitt eines der Gasnetze Sensoren zur Messung von Betriebsparametern, ausgewählt aus Druck, Temperatur und Gasmenge, installiert sein, wobei die mittels der Sensoren erfassten Messdaten in einer Datenbank gespeichert werden und wobei das Verfahren ferner umfasst: automatisiertes Auslesen der in der Datenbank gespeicherten Messdaten und Verwenden der Messdaten als Eingangsdaten zur Berechnung der technischen Verbrauchsfaktoren. Die Messdaten können insbesondere automatisiert in regelmäßigen Intervallen aus der Datenbank ausgelesen und den jeweiligen Netzabschnitten zugeordnet werden.

Die technische Umsetzung umfasst typischerweise auch entsprechende Schnittstellenmodule für die Anbindung der Sensorik an das Datenerfassungssystem, die Sicherstellung der Datenintegrität und -sicherheit sowie die Integration der Auswertungsfunktionen, wie in den übrigen Teilen der Beschreibung dargestellt.

Die erfassten und verarbeiteten Sensordaten können darüber hinaus auch mit anderen, bereits vorhandenen Netzdaten kombiniert werden, um ein noch vollständigeres Bild über den technischen und betriebswirtschaftlichen Zustand des Netzes zu erhalten. Beispielsweise lassen sich die gemessenen Gasverbräuche mit Netzsimulationen abgleichen oder für Prognosemodelle heranziehen.

Die Sensordaten können somit integraler Bestandteil der Gesamtbewertung werden und - gemeinsam mit den statischen Netzparametern - in die Berechnung und Priorisierung der technischen Verbrauchsfaktoren einfließen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

KURZE BESCHREIBUNG DER ZEICHNUNGEN

Weitere Vorteile, Einzelheiten und Merkmale der hier beschriebenen Verfahren, Vorrichtungen und Systeme ergeben sich aus der nachfolgenden Beschreibung von Ausführungsbeispielen und den Figuren.

Fig. 1     zeigt ein Flussdiagramm eines Ausführungsbeispiels eines Verfahrens für Gasnetze;

Fig. 2     zeigt eine schematische Darstellung eines Ausführungsbeispiels einer Vorrichtung für Gasnetze; und

Fig. 3     zeigt ein Flussdiagramm eines weiteren Ausführungsbeispiels eines Verfahrens für Gasnetze.

DETAILLIERTE BESCHREIBUNG

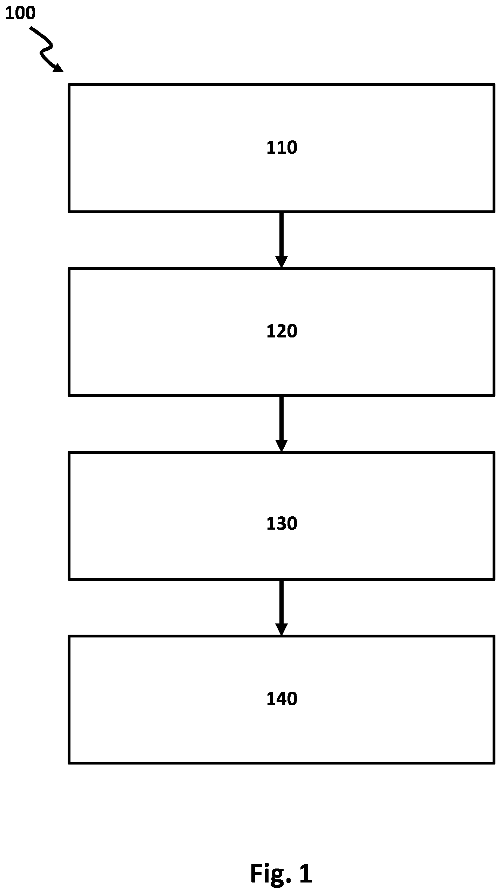

Die Fig. 1 zeigt ein Flussdiagramm eines Ausführungsbeispiels eines Verfahrens 100 für Gasnetze.
Das Verfahren 100 umfasst die folgenden Verfahrensschritte: Aufnehmen 110 von Daten betreffend die Gasnetze, Berechnen 120, basierend auf den Daten betreffend die Gasnetze, von technischen Verbrauchsfaktoren für jedes Gasnetz, Vergleichen 130 der technischen Verbrauchsfaktoren und Ausgeben 140 eines Vergleichsergebnisses der technischen Verbrauchsfaktoren.

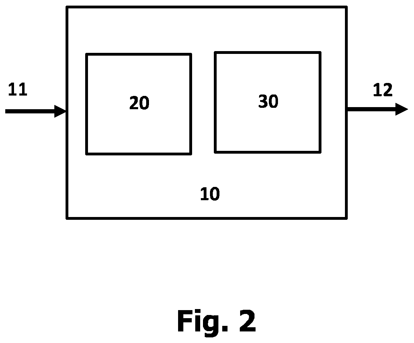

Die Fig. 2 zeigt eine schematische Darstellung eines Ausführungsbeispiels einer Vorrichtung 10 für Gasnetze. Die Vorrichtung 10 umfasst einen Prozessor 20 und eine Kommunikationsvorrichtung 30, und ist dazu eingerichtet, das in der Fig. 1 gezeigte Verfahren 100 auszuführen.
In die Vorrichtung 10 können über den Eingang 11 die folgenden Daten betreffend eine Vielzahl von Gasnetzen eingehen: Baujahr eines Gasnetzes, Material eines Gasnetzes, Dimension eines Gasnetzes, technischer Zustand eines Gasnetzes, maximale Lebensdauer eines Gasnetzes, Druckstufe eines Gasnetzes, Wasserstoffeignung eines Gasnetzes und/oder Entfernung eines Gasnetzes zu einem Wasserstoffbezugspunkt. Zusätzlich erfolgt eine Prüfung, ob Biomethan im Netz vorhanden ist. Der Prozessor 20 berechnet dann, basierend auf den Daten, technische Verbrauchsfaktoren für jedes Gasnetz und vergleicht anschließend die technischen Verbrauchsfaktoren. Die technischen Verbrauchsfaktoren können jeweils als eine Zahl zwischen 0 und 1 berechnet werden. Vor dem Berechnen der technischen Verbrauchsfaktoren können die aufgenommen Daten noch bereinigt werden. Als Ausgabe 12 gibt die Vorrichtung 10 ein Vergleichsergebnis aus. Bei dem Vergleichsergebnis kann es sich um eine Priorisierung von Gasnetzen handeln.
Gemäß einer Weiterbildung kann die Vorrichtung 10, basierend auf dem Vergleichsergebnis, eines einer Vielzahl von Gasnetzen auswählen.
Die Kommunikationsvorrichtung 30 ist dazu eingerichtet, eine Nachricht an einen Netzbetreiber zu senden. Bei der Nachricht kann es sich beispielsweise um eine E-Mail an zuständiges Fachpersonal des Netzbetreibers handeln.
Die in der Fig. 2 gezeigte Vorrichtung 10 kann ferner dazu eingerichtet sein, ein Gasnetz nach Netzebenen und/oder Standorten zu filtern, wobei sich in diesem Fall die technischen Verbrauchsfaktoren in Abhängigkeit von der Filterung ändern.
Des Weiteren kann die in der Fig. 2 gezeigte Vorrichtung 10 dazu eingerichtet sein, basierend auf dem Vergleichsergebnis, Modernisierungsvorgaben für die Gasnetze zu bestimmen.

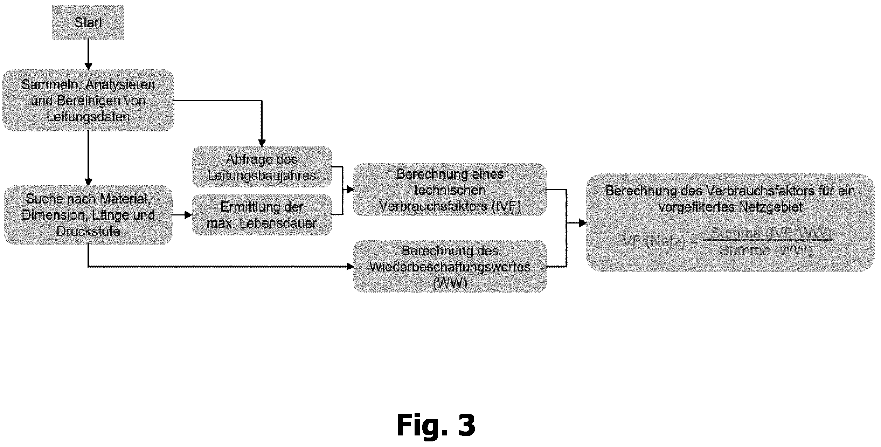

Die Fig. 3 zeigt ein Flussdiagramm eines weiteren Ausführungsbeispiels eines Verfahrens für Gasnetze. Das Verfahren kann von der in der Fig. 2 gezeigten Vorrichtung 10 ausgeführt werden.
Das Verfahren betrifft eine Prüfung von Gasleitungsdaten anhand des Baujahres eines Gasnetzes. Das Verfahren beginnt mit dem "Sammeln, Analysieren und Bereinigen von Leitungsdaten". Diese Daten umfassen wesentliche technische Parameter wie Material, Dimension, Länge und Druckstufe der Leitungen. Anschließend erfolgt eine "Suche nach Material, Dimension, Länge und Druckstufe", um die erforderlichen Parameter für die weitere Berechnung sicherzustellen. Gleichzeitig wird das "Leitungsbaujahr abgefragt". Auf Basis der gesammelten Daten wird dann die "maximale Lebensdauer" der Leitungen bestimmt.
Mit diesen Informationen erfolgt die "Berechnung eines technischen Verbrauchsfaktors (tVF)" der das Verhältnis zwischen dem aktuellen Zustand und der maximalen Lebensdauer der Leitung beschreibt. Zusätzlich wird der "Wiederbeschaffungswert (WW)" der Leitung berechnet, der den aktuellen Marktwert der Leitung angibt.
In einem letzten Schritt wird der "Verbrauchsfaktor für ein vorgefiltertes Netzgebiet" berechnet. Diese Berechnung erfolgt nach der Formel:

$$VF(Netz) = Summe\ (tVF * WW) / Summe\ (WW)$$

Der Verbrauchsfaktor kann dabei für verschiedene Netzebenen oder Standorte berechnet werden, was durch entsprechende Vorfilterungen ermöglicht wird. Der resultierende Verbrauchsfaktor ist eine Zahl zwischen 0 und 1 und dient zur Priorisierung der Netzgebiete nach ihrem Zustand. Je nach gewählter Vorfilterung kann sich der Verbrauchsfaktor ändern, was eine flexible Analyse und Bewertung der Netzgebiete ermöglicht. Das Verfahren kann eine Vielzahl von Verbrauchsfaktoren berechnen. Die Verbrauchsfaktoren können dann verglichen und ein Vergleichsergebnis ausgegeben werden.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

**Patentansprüche**

1.  Verfahren (100) für Gasnetze umfassend:

    Aufnehmen (110) von Daten betreffend die Gasnetze,
    Berechnen (120), basierend auf den Daten betreffend die Gasnetze, von technischen Verbrauchsfaktoren für jedes Gasnetz,
    Vergleichen (130) der technischen Verbrauchsfaktoren und
    Ausgeben (140) eines Vergleichsergebnisses der technischen Verbrauchsfaktoren.

2.  Verfahren nach Anspruch 1, wobei die aufgenommen Daten umfassen: Baujahr eines Gasnetzes oder eines Teils eines Gasnetzes, Material von Komponenten, Rohrleitungen und/oder Anlagentechnik eines Gasnetzes oder eines Teils eines Gasnetzes, Dimension eines Gasnetzes oder eines Teils eines Gasnetzes, technischer Zustand eines Gasnetzes oder eines Teils eines Gasnetzes, maximale Lebensdauer eines Gasnetzes oder eines Teils eines Gasnetzes, Druckstufe eines Gasnetzes oder eines Teils eines Gasnetzes, Wasserstoffeignung eines Gasnetzes oder eines Teils eines Gasnetzes und/oder Entfernung eines Gasnetzes oder eines Teils eines Gasnetzes zu einem Wasserstoffbezugspunkt.

3.  Verfahren nach einem der vorhergehenden Ansprüche, wobei das Vergleichsergebnis eine Priorisierung der Gasnetze angibt.

4.  Verfahren nach einem der vorhergehenden Ansprüche, ferner umfassend:

    Auswählen, basierend auf dem Vergleichsergebnis, eines der Gasnetze und
    Ausgeben einer das ausgewählte Gasnetz betreffenden Nachricht.

5.  Verfahren nach einem der vorhergehenden Ansprüche, ferner umfassend:

    Filtern der Gasnetze nach Netzebenen und/oder Standorten, wobei
    sich die technischen Verbrauchsfaktoren in Abhängigkeit von der Filterung ändern.

6.  Verfahren nach einem der vorhergehenden Ansprüche, wobei die technischen Verbrauchsfaktoren jeweils als eine Zahl zwischen 0 und 1 berechnet werden.

7.  Verfahren nach einem der vorhergehenden Ansprüche, ferner umfassend:
    Bestimmen, basierend auf dem Vergleichsergebnis, von Modernisierungsvorgaben für die Gasnetze.

8.  Verfahren nach einem der vorhergehenden Ansprüche, ferner umfassend:
    Bereinigen, vor dem Berechnen der technischen Verbrauchsfaktoren, der aufgenommen Daten.

9.  Verfahren nach einem der vorhergehenden Ansprüche, ferner umfassend Prüfen, ob Biomethan im Gasnetz vorhanden ist.

10. Verfahren nach einem der vorhergehenden Ansprüche,

    wobei in zumindest einem Abschnitt eines der Gasnetze Sensoren zur Messung von Betriebsparametern, ausgewählt aus Druck, Temperatur und Gasmenge, installiert sind, wobei die mittels der Sensoren erfassten Messdaten in einer Datenbank gespeichert werden und
    wobei das Verfahren ferner umfasst:

automatisiertes Auslesen der in der Datenbank gespeicherten Messdaten und
Verwenden der Messdaten als Eingangsdaten zur Berechnung der technischen Verbrauchsfaktoren.

11. Verfahren nach Anspruch 10,
wobei die Messdaten automatisiert in regelmäßigen Intervallen aus der Datenbank ausgelesen und jeweiligen Netzabschnitten des Gasnetzes zugeordnet werden.

12. Vorrichtung (10) für Gasnetze umfassend:
einen Prozessor (20), der dazu eingerichtet ist, das Verfahren nach einem der vorhergehenden Ansprüche auszuführen.

13. Vorrichtung (10) nach Anspruch 12 ferner umfassend eine Kommunikationsvorrichtung (30), die dazu eingerichtet ist, die Nachricht an einen Netzbetreiber zu senden.

14. Vorrichtung nach einem der Ansprüche 12 oder 13,

wobei die Vorrichtung mit einem oder mehreren Sensoren, ausgewählt aus Drucksensoren, Temperatursensoren und Mengensensoren, in Gasstationen oder Netzkoppelpunkten eines der Gasnetze verbunden ist,
wobei die Vorrichtung dazu eingerichtet ist, von den Sensoren erfasste Messdaten automatisiert auszulesen und als Eingangsdaten zur Berechnung der technischen Verbrauchsfaktoren zu verwenden.

15. Vorrichtung nach Anspruch 14,
wobei die Vorrichtung ferner dazu eingerichtet ist, die Messdaten in regelmäßigen Intervallen aus einer Datenbank auszulesen und jeweiligen Netzabschnitten des Gasnetzes zuzuordnen.

100

110

120

130

140

**Fig. 1**

**11** → **20** **30** → **12**

**10**

**Fig. 2**

Start

Sammeln, Analysieren und Bereinigen von Leitungsdaten

Suche nach Material, Dimension, Länge und Druckstufe

Abfrage des Leitungsbaujahres

Ermittlung der max. Lebensdauer

Berechnung eines technischen Verbrauchsfaktors (tVF)

Berechnung des Wiederbeschaffungswertes (WW)

Berechnung des Verbrauchsfaktors für ein vorgefiltertes Netzgebiet

$$VF\ (Netz) = \frac{Summe\ (tVF*WW)}{Summe\ (WW)}$$

**Fig. 3**

Europäisches
Patentamt

European
Patent Office

Office européen
des brevets

# EUROPÄISCHER RECHERCHENBERICHT

Nummer der Anmeldung

EP 25 20 1618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 114 547 822 A (SOUTH CHINA BRANCH COMPANY OF NAT PETROLEUM AND GAS PIPELINE NETWORK G) 27. Mai 2022 (2022-05-27) | 1-9,12, 13 | INV.<br>F17D1/04<br>F17D3/00 |
| A | * Abbildungen 1-3 * | 10,11, 14,15 | |
| | ----- | | |
| X | CN 114 240 064 A (CHINA POWER CONSTRUCTION GROUP EAST CHINA SURVEY DESIGN RES INSTITUTE) 25. März 2022 (2022-03-25)<br>* Absätze [0040], [0049], [0054], [0055], [0058], [0067], [0084], [0085], [0123], [0129], [0131]; Abbildungen 1-3 * | 1-15 | |
| | ----- | | |
| X | US 2024/036563 A1 (SHAO ZEHUA [CN] ET AL) 1. Februar 2024 (2024-02-01)<br>* Absätze [0082] - [0103]; Abbildungen 1,4,5 * | 1-15 | |
| | ----- | | |

RECHERCHIERTE SACHGEBIETE (IPC)

F17D

Der vorliegende Recherchenbericht wurde für alle Patentansprüche erstellt

| Recherchenort | Abschlußdatum der Recherche | Prüfer |
|---|---|---|
| München | 11. Februar 2026 | Papagiannis, Michail |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 25 20 1618

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2026

| Im Recherchenbericht angeführtes Patentdokument | Datum der Veröffentlichung | Mitglied(er) der Patentfamilie | Datum der Veröffentlichung |
|---|---|---|---|
| CN 114547822 A | 27-05-2022 | KEINE | |
| CN 114240064 A | 25-03-2022 | KEINE | |
| US 2024036563 A1 | 01-02-2024 | US 2022163958 A1<br>US 2024036563 A1 | 26-05-2022<br>01-02-2024 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1244330
- DE 102010020280 A1